# DEMANDE DE BREVET EUROPEEN

(11) **EP 0 790 212 A1**
(43) Date de publication de la demande: **20.08.1997**
(21) Numéro de dépôt: 97400223.0
(22) Date de dépôt: 31.01.1997
(51) Int. Cl.: C01B 3/50, C01B 31/08

(54) **Procédé et installation de production de monoxyde de carbone**

(30) Priorité: 16.02.1996 FR 9601962
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Billy, Jean, 94420 Le Plessis Trevise (FR)
(74) Mandataire: Mercey, Fiona Susan

(57) **Abrégé**

Dans un procédé de production de monoxyde de carbone, un gaz de synthèse généré à partir d'un fluide d'alimentation est séparé par une étape de distillation cryogénique. Une fraction enrichie en méthane résiduel est recyclée au fluide d'alimentation.

## Description

La présente invention est relative à un procédé et une installation de production de monoxyde de carbone. En particulier, elle est relative à la production de monoxyde de carbone par génération d'un gaz de synthèse puis épuration de ce gaz.

Dans les procédés habituels de production de CO, la génération du gaz de synthèse est basée sur une oxydation partielle de coke et d'hydrocarbures tels que gaz naturel, GPL, naphta, résidus sous vide, notamment par reformage à l'oxygène à la vapeur d'eau ou au CO₂. Le gaz de synthèse est ensuite épuré, généralement par voie cryogénique ou chimique.

L'oxyde de carbone, de formule chimique CO, est souvent produit à partir d'hydrocarbure selon une chaîne de procédé comportant les principales étapes suivantes :
- craquage de l'hydrocarbure par réformage à la vapeur d'eau ou oxydation partielle à l'oxygène ;
- décarbonatation par lavage du mélange de gaz de synthèse ainsi généré ;
- séparation cryogénique des composants de ce gaz qui fournit finalement quatre produits : le monoxyde de carbone, de l'hydrogène, une fraction non séparée du gaz de synthèse et un résiduaire méthane.

Cette chaîne de procédé est décrite en détail dans "Fortschritte bei der H₂/CO Tieftemperaturzerlegung" de Dr. R. Berninger, Linde Berichte aus Technik und Wissenschaft 62/1988.

Dans l'objectif de minimiser la consommation spécifique d'hydrocarbure par mole de CO produite, quatre techniques sont généralement utilisées :
- le recyclage dans la chaîne de traitement de la fraction non séparée du gaz de synthèse qui est riche en CO ;
- l'emploi d'un procédé de séparation cryogénique minimisant la perte en CO dans le produit hydrogène (procédé dit du "lavage au méthane") ;
- le recyclage dans la charge initiale en hydrocarbures du résiduaire méthane ;
- le recyclage dans la charge initiale en hydrocarbures du résiduaire de la décarbonatation.

La présente invention a pour but de réduire encore la consommation spécifique d'hydrocarbure par mole de CO produite en ajoutant une étape de procédé permettant de récupérer et recycler le méthane résiduel contenu dans l'hydrogène coproduit.

A cet effet, l'invention a pour objet un procédé de production de monoxyde de carbone (CO) par génération d'un gaz de synthèse à partir d'un fluide d'alimentation puis séparation de ce gaz, caractérisé en ce que l'on recycle au moins une partie d'une fraction enrichie en méthane résiduel au fluide d'alimentation.

L'invention a également pour objet une installation de production de monoxyde de carbone (CO) du type comprenant un appareil de génération d'un gaz de synthèse contenant du CO et un appareil de séparation de ce gaz et des moyens pour renvoyer une partie de la fraction enrichie en méthane résiduel provenant de l'appareil de séparation à l'entrée de l'appareil de génération du gaz de synthèse.

Le procédé du lavage au méthane produit une fraction d'hydrogène disponible sous la pression du gaz de synthèse, saturée en méthane (de fraction molaire entre 1 % et 2 %). Cette quantité de méthane peut, suivant le procédé utilisé pour la génération du gaz de synthèse, représenter -exprimée en atomes de carbone- entre 1 % et 10 % de la quantité de carbone contenue dans la production de monoxyde de carbone.

La présente invention vise à séparer cette fraction méthane de l'hydrogène porteur par le procédé de perméation. Le résiduaire de la perméation, riche en méthane, est recyclable dans la charge d'hydrocarbure, le perméat est du gaz hydrogène délesté en méthane et disponible en basse pression.

L'invention est particulièrement intéressante dans le cas d'une unité ne produisant que de l'oxyde de carbone, dans laquelle en conséquence l'hydrogène sous-produit est utilisé comme combustible.

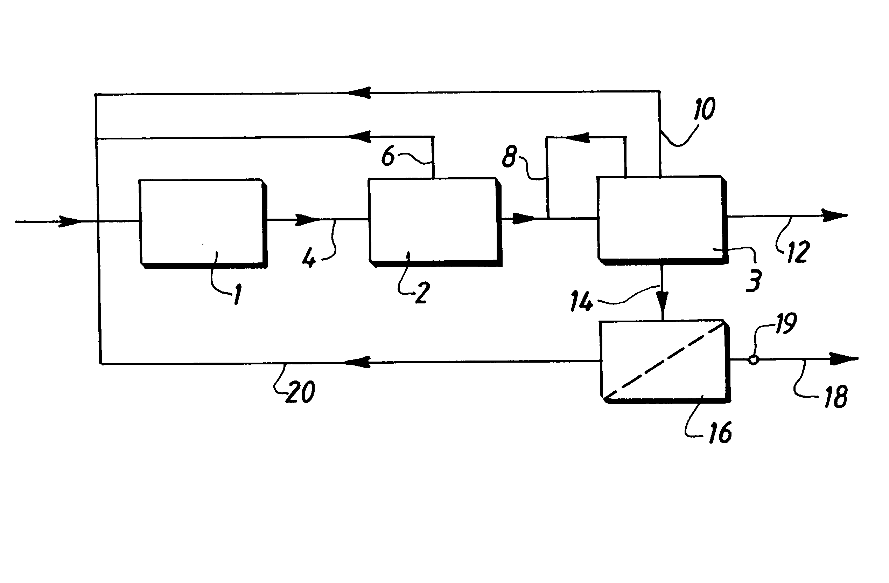

Un exemple de mise en oeuvre de l'invention va maintenant être décrit en regard du dessin annexé, sur lequel la figure unique représente schématiquement une installation conforme à l'invention.

L'installation représentée sur le dessin comprend un appareil 1 de génération de gaz de synthèse par craquage catalytique, un appareil 2 de lavage aux amines et un appareil 3 de séparation cryogénique par lavage au méthane. Le gaz naturel qui constitue le fluide d'alimentation est envoyé à l'appareil 1 de génération de gaz de synthèse. Le gaz de synthèse est ensuite épuré par une étape de lavage aux amines dans l'appareil 2 par la conduite 4. Le dioxyde de carbone ainsi séparé est recyclé par la conduite 6 à l'entrée de l'appareil 1 de génération de gaz de synthèse. Après cette décarbonatation dans l'appareil 2, le gaz de synthèse épuré est séparé par une ou plusieurs étapes de distillation cryogénique dans l'appareil 3 de séparation. Le gaz de flash produit est recyclé au gaz de synthèse épuré par la conduite 8 et un premier débit de méthane est recyclé à l'entrée de l'appareil de génération de gaz de synthèse par la conduite 10. Le produit principal de l'installation est constitué par le CO de la conduite 12. Un mélange d'hydrogène et de méthane issu de la colonne de lavage est envoyé par la conduite 14 à l'appareil de perméation 16. Le perméat de l'appareil est constitué par un débit appauvri en méthane 18 et le non-perméat est constitué par un débit enrichi en méthane. Ce non-perméat ou une partie de ce non-perméat est recyclé à l'entrée de l'appareil 1 de génération de gaz de synthèse par la conduite 20.

## Revendications

1. Procédé de production de monoxyde de carbone (CO) par génération d'un gaz de synthèse à partir d'un fluide d'alimentation puis séparation de ce gaz, caractérisé en ce que l'on recycle au moins une partie d'une fraction enrichie en méthane résiduel au fluide d'alimentation.

2. Procédé selon la revendication 1 dans lequel le résiduaire enrichi en méthane est produit par une étape de perméation.

3. Procédé selon la revendication 1 dans lequel l'étape de perméation sépare un mélange gazeux comprenant l'hydrogène et le méthane.

4. Procédé selon la revendication 3 dans lequel on recycle la majorité ou la totalité de ladite fraction constituant le non-perméat de l'étape de perméation.

5. Procédé selon la revendication 3 dans lequel on règle la pression du perméat de l'étape de perméation afin de contrôler la composition dudit perméat.

6. Procédé selon l'une des revendications précédentes dans lequel le gaz de synthèse est séparé par distillation cryogénique.

7. Installation de production de monoxyde de carbone (CO) du type comprenant un appareil (1) de génération d'un gaz de synthèse contenant du CO et un appareil (3) de séparation de ce gaz et des moyens pour renvoyer une partie de la fraction enrichie en méthane résiduel provenant de l'appareil de séparation à l'entrée de l'appareil de génération du gaz de synthèse.

8. Installation selon la revendication 7 dans laquelle un appareil de perméation produit la fraction enrichie en méthane résiduel à partir d'un débit provenant de l'appareil d'épuration.

9. Installation selon la revendication 8 dans laquelle le débit provenant de l'appareil d'épuration contient de l'hydrogène et du méthane.

10. Installation selon la revendication 9 comprenant des moyens (19) de régulation de la pression du perméat de l'étape de perméation.

11. Installation selon l'une des revendications 7 à 10 dans laquelle l'appareil (3) est un appareil de distillation cryogénique.
